# EUROPEAN PATENT SPECIFICATION

(11) **EP 1 974 402 B1**
(45) Date of publication and mention of the grant of the patent: **17.08.2016**
(21) Application number: 07861211.6
(22) Date of filing: 16.01.2007
(51) Int. Cl.: H01M 8/0273, H01M 8/0284, H01M 8/0297

(54) **BONDED FUEL CELL ASSEMBLY AND METHODS AND SYSTEMS FOR PRODUCING THE SAME**
GEBUNDENE BRENNSTOFFZELLENANORDNUNG SOWIE VERFAHREN UND SYSTEME ZU IHRER HERSTELLUNG
ENSEMBLE PILE À COMBUSTIBLE COLLÉ ET PROCÉDÉS ET SYSTÈMES POUR LA FABRICATION DE CELUI-CI

(30) Priority: 17.01.2006 US 759452 P
(43) Date of publication of application: 01.10.2008
(73) Proprietor: Henkel IP & Holding GmbH, 40589 Düsseldorf (DE)
(72) Inventor: BURDZY, Matthew Peter, South Windsor, CT 06074 (US); EINSLA, Brian Russell, Los Alamos, NM 87544 (US); WELCH, Kevin James, Wallingford, CT 06492 (US)
(74) Representative: Henkel IP Department
(86) International application number: PCT/US2007/001005
(87) International publication number: WO 2008/048336

(56) References cited:
- EP-A2- 0 918 362
- WO-A-2004/107476
- WO-A-2005/074060
- WO-A-2005/078839
- WO-A1-01/43964
- WO-A2-02/093672
- US-A- 4 018 851
- US-A1- 2002 122 970
- US-B1- 6 451 468
- US-B1- 6 451 469
- US-B1- 6 593 020
- US-B1- 6 730 363
- US-B2- 6 656 580
- US-B2- 6 864 009

## Description

### FIELD OF THE INVENTION:

The present invention relates to a method for bonding and sealing components of an electrochemical cell, such as a fuel cell, and an electrochemical cell formed therefrom. More particularly, the present invention relates to a method and design for bonding fuel cell components in a manner suitable for continuous production of the fuel cell components.

### BRIEF DESCRIPTION OF RELATED TECHNOLOGY:

Although there are various known types of electrochemical cells, one common type is a fuel cell, such as a proton exchange membrane ("PEM") fuel cell. The PEM fuel cell contains a membrane electrode assembly ("MEA") provided between two flow field plates or bipolar plates. Gaskets are used between the bipolar plates and the MEA to provide seals thereat. Additionally, since an individual PEM fuel cell typically provides relatively low voltage or power, multiple PEM fuel cells are stacked to increase the overall electrical output of the resulting fuel cell assembly. Sealing is also required between the individual PEM fuel cells. Moreover, cooling plates are also typically provided to control temperature within the fuel cell. Such plates are also sealed to prevent leakage within the fuel cell assembly. After assembling the fuel cell stack is clamped to secure the assembly.

As described in U.S. Patent No. 6,057,054, liquid silicone rubbers have been proposed to be molded onto fuel assemblies. Such silicone compositions, however, degrade before the desired operating lifetime of the fuel cell is achieved. Also, such silicone rubbers release materials that contaminate the fuel cell, thereby adversely affecting the performance of the fuel cell. Molding of liquid silicone rubber onto separator plates is also described in U.S. Patent No. 5,264,299. To increase the operating lifetime, more durable elastomers such as fluoroelastomers, as described in U.S. Patent No. 6,165,634, and polyolefin hydrocarbons, as described in U.S. Patent No. 6,159,628, have been proposed to bond the surface of fuel cell components. The application of these compositions, however, is time consuming as each individual element of the fuel cell or each arrangement of fuel cell components have to be individually bonded with these compositions.

U.S. Patent Application Publication No. US 2005/0263246 A1 describes a method for making an edge-seal on a membrane electrode assembly that impregnates the gas diffusion layer using a thermoplastic film. Application temperatures suitable for bonding the thermoplastic film may limit the design of a fuel cell and also are difficult to apply as aligned stacks of fuel cell components have to be heated and cooled under controlled conditions.

U.S. Patent No. 6,884,537 described the use of rubber gaskets with sealing beads for sealing fuel cell components. The gaskets are secured to the fuel cell components through the use of layers of adhesive to prevent movement or slippage of the gaskets. Similarly, International Patent Publication Nos. WO 2004/061338 A1 and WO 2004/079839 A2 describe the use of multi-piece and single-piece gaskets for sealing fuel cell components. The gaskets are secured to the fuel cell components through use of an adhesive. The placement of the adhesives and the gaskets are not only time consuming, but problematic because misalignment may cause leakage and loss of performance of the fuel cell.

U.S. Patent No. 6,875,534 describes a cured-in-place composition for sealing a periphery of a fuel cell separator plate. The cured-in-place composition includes a polyisobutylene polymer having a terminal allyl radial at each end, an organopolysiloxane, an organohydrogenpolysiloxane having at least two hydrogen atoms each attached to a silicon atom and a platinum catalyst. U.S. Patent No. 6,451,468 describes a formed-in-place composition for sealing a separator, an electrode or an ion exchange membrane of a fuel cell. The formed-in-place composition includes a linear polyisobutylene perfluoropolyether having a terminal alkenyl group at each end, a cross-linker or hardener having at least two hydrogen atoms each bonded to a silicon atom, and a hydrosilylation catalyst. The cross-linked density and the resultant properties of these compositions are limited by using linear polyisobutylene oligomers having an allyl or alkenyl functionality of two. Functionality of these compositions is modified by varying the hydrosilyl functionality, which limits the properties of the resultant compositions.

International Patent Publication No. WO 2004/047212 A2 describes the use of a foam rubber gasket, a liquid silicone sealant or a solid fluoroplastic for sealing fluid transport layer or a gas diffusion layer of a fuel cell. The use of solid gaskets, i.e., foam rubber and/or solid fluoroplastic tape or film, makes placement of these materials and subsequent alignment of the fuel cell components and gaskets time consuming and problematic.

U.S. Patent Application Publication No. 2003/0054225 describes the use of rotary equipment, such as drums or rollers, for applying electrode material to fuel cell electrodes. While this publication describes an automated process for forming fuel cell electrodes, the publication fails to address the sealing concerns of the formed fuel cells.

EP 159 477 A1 describes a peroxide curable terpolymer of isobutylene, isoprene and para-methylstryene. Use of the composition in fuel cells is noted, but no application, processing, or device details are provided.

U.S. Patent No. 6,942,941 describes the use of a conductive adhesive to bond different sheets to form a bipolar separator plate. A conductive primer is first applied onto two plates and partially cured by heating to about 100°F. An adhesive is then applied between the two plates, and after pressing the plates together the adhesive is cured by heating to about 260°C.

Despite the state of the art, there remains a need for a sealant composition suitable for use with electrochemical cell components, desirably applied through liquid injection molding.

### SUMMARY OF THE INVENTION:

The present invention provides a method, a composition and a system to bond and seal fuel cell components. The sealant composition used to bond and seal fuel cell parts may include two or more components that separately are stable, however, when combined or exposed to an energy source are curable. In a two-component sealant system, one part of the sealant may be applied to first fuel cell component substrate, and the second part may be applied to a second fuel cell substrate. The substrates are joined and the sealant is cured to from a bonded fuel cell component assembly.

In one aspect of the present invention, a method for forming a fuel cell component includes providing a two-part sealant having a first part including an initiator and a second part including a polymerizable material; applying the first part of the sealant to a substrate of a first fuel cell component; applying the second part of the sealant to a substrate of a second fuel cell component; juxtaposingly aligning the substrates of the first and second fuel cell components; and curing the sealant to bond the first and second fuel components to one and the other. Desirably, the initiator is an actinic radiation initiator, whereby the sealant is cured by actinic radiation. The polymerizable material may be a polymerizable monomer, oligomer, telechelic polymer, functional polymer and combinations thereof. Desirably, the functional group is epoxy, allyl, vinyl, acrylate, methacrylate, imide, amide, urethane and combinations thereof. Useful fuel cell components to be bonded include a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

In another aspect of the present invention, a method for forming a fuel cell component includes providing a two-part sealant, where a first part includes an initiator and the second part includes a polymerizable material; providing first and second separator plates and first and second resin frames; coating a side or both sides, desirably both sides, of the first separator plate with the first part of the sealant; activating the first part of the sealant on the first separator plate with actinic radiation; coating a side or both sides, desirably one side, of the first resin frame with the second part of the sealant; juxtaposingly aligning first separator plate and the first resin frame; curing the sealant to bond the first separator plate and the first resin frame to one and the other; coating a side or both sides, desirably both sides, of the second separator plate with the second part of the sealant; coating a side or both sides, desirably one side, of the second resin frame with the first part of the sealant; activating the first part of the sealant on the second resin frame with actinic radiation; juxtaposingly aligning the second separator plate and the second resin frame; curing the sealant to bond the second separator plate and the second resin frame to one and the other; juxtaposingly aligning the first and second separator plates; curing the sealant to bond the first and second separator plates to one and the other to form a form bipolar separator plate. Desirably, the initiator is an actinic radiation initiator, whereby the sealant is cured by actinic radiation. The polymerizable material may be a polymerizable monomer, oligomer, telechelic polymer, functional polymer and combinations thereof. Desirably, the functional group is epoxy, allyl, vinyl, acrylate, methacrylate, imide, amide, urethane and combinations thereof. Useful fuel cell components to be bonded include a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

In another aspect of the present invention, a system for forming a fuel cell component includes a first dispenser for providing a first part of a two-part sealant, where the first part the sealant includes an initiator; a second dispenser for providing a second part of a two-part sealant, where the second part of the sealant includes a polymerizable material; a first station for applying the first part of the sealant to a substrate of a first fuel cell component; a second station for applying the second part of the sealant to a substrate of a second fuel cell component; a third station for juxtaposingly aligning the substrates of the first and second fuel cell components; and a curing station for curing the sealant to bond the first and second fuel components to one and the other. Desirably, the initiator is an actinic radiation initiator, whereby the sealant is cured by actinic radiation. The polymerizable material may be a polymerizable monomer, oligomer, telechelic polymer, functional polymer and combinations thereof. Desirably, the functional group is epoxy, allyl, vinyl, acrylate, methacrylate, imide, amide, urethane and combinations thereof. Useful fuel cell components to be bonded include a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

### BRIEF DESCRIPTION OF THE DRAWINGS:

FIG. 1 is a cross-sectional view of a fuel cell having an anode flow field plate, a resin frame, a gas diffusion layer, an anode catalyst, a proton exchange membrane, a cathode catalyst, a second gas diffusion layer, s second resin frame and a cathode flow field plate.
FIG. 2 is an exploded, cross-sectional view of a separator plate and resin frame assembly according to the present invention.
FIG. 3 is a cross-sectional view of an assembled separator plate and resin frame assembly according to the present invention.
FIG. 4 is a schematic of an assembly for forming bonded fuel cell components of the present invention.

### DETAILED DESCRIPTION OF THE INVENTION:

The present invention is directed to a method for bonding and compositions for bonding components of an electrochemical cell. As used herein, an electrochemical cell is a device which produces electricity from chemical sources, including but not limited to chemical reactions and chemical combustion. Useful electrochemical cells include fuel cells, dry cells, wet cells and the like. A fuel cell, which is described in greater detail below, uses chemicals reactants to produce electricity. A wet cell has a liquid electrolyte. A dry cell has an electrolyte absorbed in a porous medium or otherwise restrained from being flowable.

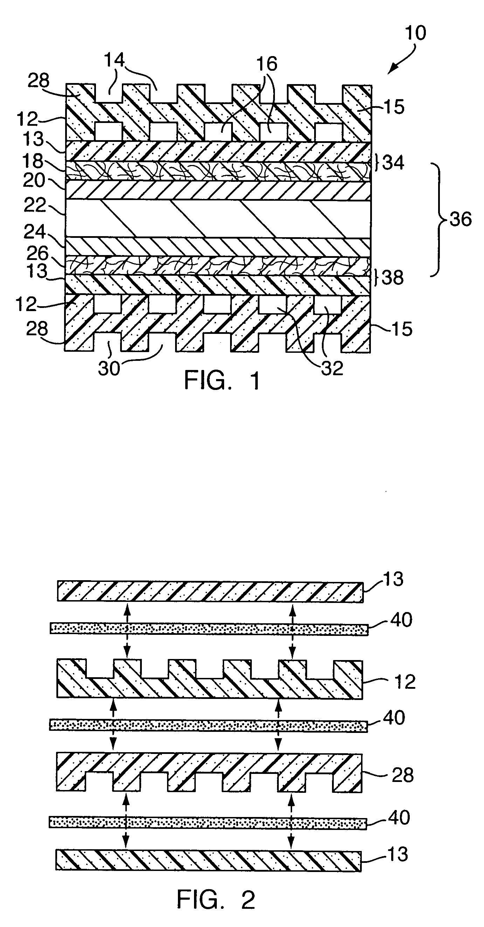

FIG. 1 shows a cross-sectional view of the basic elements of an electrochemical fuel cell, such as fuel cell **10.** Electrochemical fuel cells convert fuel and oxidant to electricity and reaction product. Fuel cell **10** consists of an anode flow field plate **12** with open face coolant channels **14** on one side and anode flow channels **16** on the second side, a resin plate **13,** a gas diffusion layer **18,** an anode catalyst **20,** a proton exchange membrane **22,** a cathode catalyst **24,** a second gas diffusion **layer 26,** a second resin plate **13** and a cathode flow field plate **28** with open face coolant channels **30** on one side and cathode flow channels **32** on the second side, interrelated as shown in FIG. 1. The gas diffusion layer **18,** the anode catalyst **20,** the proton exchange membrane **22,** the cathode catalyst **24** and the second gas diffusion layer **26** combination is often referred to as a membrane electrode assembly **36.** Gas diffusion layers **18** and 26 are typically formed of porous, electrically conductive sheet material, such as carbon fiber paper. The present invention is not, however, limited to the use of carbon fiber paper and other materials may suitably be used. Fuel cells are not, however, limited to such a depicted arrangement of components. The anode and cathode catalyst layers **20** and **24** are typically in the form of finely comminuted platinum. The anode **34** and cathode **38** are electrically coupled (not shown) to provide a path for conducting electrons between the electrodes to an external load (not shown). The flow field plates **12** and **28** are typically formed of graphite impregnated plastic, compressed and exfoliated graphite; porous graphite; stainless steel or other graphite composites. The plates may be treated to effect surface properties, such as surface wetting, or may be untreated. The present invention is not, however, limited to the use of such materials for use as the flow field plates and other materials may suitably be used. For example, in some fuel cells the flow field plates are made from a metal or metal containing material, typically, but not limited to, stainless steel. The flow field plates may be bipolar plates, i.e., a plate having flow channels on opposed plate surfaces. For example, as depicted in FIGS. 2-3, the bipolar flow field plates **15** may be made from monopolar plates **12, 28** having a flow channel only on one side. The monopolar plates **12** and **28** are secured to one and the other to from bipolar plates **15.** In one aspect of the present invention, the plates **12** and **28** are also sealed with the composition and by the methods of the present invention.

Some fuel cell designs utilize resin frames **13** between the membrane electrode assembly **36** and the separator plates **12, 28** to improve the durability of the membrane electrode assembly **36** and afford the correct spacing between the membrane electrode assembly **36** and separator plates **12, 28** during fuel cell assembly. In such a design, it is necessary have a seal between the separator plates **12, 28** and the resin frames **13.**

The present invention is not limited to the fuel cell components and their arrangement depicted in FIG. 1. For example, a direct methanol fuel cell ("DMFC") can consist of the same components shown in FIG. 1 less the coolant channels. Further, the fuel cell 10 can be designed with internal or external manifolds (not shown).

While this invention has been described in terms of a proton exchange membrane (PEM) fuel cell, it should be appreciated that the invention is applicable to any type of fuel cell. The concepts in this invention can be applied to phosphoric acid fuel cells, alkaline fuel cells, higher temperature fuel cells such as solid oxide fuel cells and molten carbonate fuel cells, and other electrochemical devices.

At anode **34,** a fuel (not shown) traveling through the anode flow channels **16** permeates the gas diffusion layer **18** and reacts at the anode catalyst layer **20** to form hydrogen cations (protons), which migrate through the proton exchange membrane **22** to cathode **38.** The proton exchange membrane **22** facilitates the migration of hydrogen ions from the anode **34** to the cathode **38.** In addition to conducting hydrogen ions, the proton exchange membrane **22** isolates the hydrogen-containing fuel stream from the oxygen-containing oxidant stream.

At the cathode **38**, oxygen-containing gas, such as air or substantially pure oxygen, reacts with the cations or hydrogen ions that have crossed the proton exchange membrane **22** to form liquid water as the reaction product. The anode and cathode reactions in hydrogen/oxygen fuel cells are shown in the following equations:

Anode reaction: H₂ → 2 H⁺ + 2 e⁻ (I)

Cathode reaction: ½ O₂ + 2 H⁺ + 2 e⁻ → H₂O (II)

In one aspect of the present invention, a two-part sealant is used to bond separator plates **12, 28** and resin frames **13.** Part A of the sealant may contain a UV-activated initiator, which may be an acid, base, radical, anionic, and/or cationic initiator. Part B of the sealant may include a polymerizable monomer, oligomer, telechelic polymer, and/or functional polymer. The functional group could be, as an example, an epoxy, allyl, vinyl, acrylate, methacrylate, imide, amide or urethane. The resin frames **13** are used for spacing within the fuel cell assembly **10.** The resin frames **13** are placed on the gas pathway sides of the separators **12, 28** and seals are provided between each element. In the first manufacturing line, a separator plate **12,** typically a metal sheet, such as stainless steel, is desirably coated on both sides with part A of the sealant, cut, stamped to produce the necessary channels for reactive gas and coolant pathways, and activated with UV light. A resin frame **13** is coated on at least one side with part B of the sealant and is assembled with the coated separator plate **12** to provide an anode separator with bonded frame. In the second manufacturing line, a second separator plate **12,** typically a sheet of stainless steel, is desirably coated on both sides with part B of the sealant, cut, and stamped to produce the necessary channels for reactive gas and coolant pathways to form separator plate **28.** A second resin frame **13** coated on at least one side with part A of the sealant and irradiated with UV light is assembled with the separator plate **28** to provide a cathode separator with a bonded frame. Finally, the two manufacturing lines meet so that the bonded anode separator having an exposed coating of part A of the sealant on one of its side and the bonded cathode separator having an exposed coating of part B of the sealant on one of its sides are aligned, part A and part B of the sealant react and seal the fuel cell interfaces and to form bonded assembly.

In another aspect of the present invention, a two-part sealant is used to bond the separator plates **12, 28.** Part A of the sealant contains a UV-activated initiator, which may be an acid, base, radical, anionic, and/or cationic initiator. Part B of the sealant is composed of a polymerizable monomer, oligomer, telechelic polymer, and/or functional polymer. The functional group could be, as an example, an epoxy, allyl, vinyl, acrylate, methacrylate, imide, amide or urethane. Part A is applied to the first separator plate, and part B is applied to the second separator plate. Part A is applied to the coolant pathway side of the anode separator **12.** Part B is applied to the coolant pathway side of the cathode separator **28.** On the anode separator **12,** part A undergoes UV irradiation to activate the initiator, followed by compression assembly with the cathode separator **28.** The separators **12, 28** are joined so that part A and part B react and seal the components to form the bipolar plate **15.**

In another aspect of the present invention, a one-part sealant is used to bond separator plates **12, 28** and resin frames **13.** The sealant, which may be composed of a UV-activated acid, base, radical, anionic, and/or cationic initiator and polymerizable monomer, oligomer, telechelic polymer and/or functional polymer, may be applied to one substrate, radiated with UV light, and compressed with a second substrate to form the seal.

In another aspect of the present invention, a two-part composition is used to bond and seal. Part A is applied to the first substrate. Part B is applied to the second substrate. The two substrates are combined and fixtured. Polymerization may be achieved in its simplest form by bringing the two substrates together, or by combining the substrates and using some additional form of energy, such as pressure, heat, ultrasonic, microwave or any combinations thereof.

In another aspect of the present invention, the liquid gasket-forming material may include actinic radiation curable acrylates, urethanes, polyethers, polyolefins, polyesters, copolymers thereof and combinations thereof. Desirably, the curable material includes a (meth)acryloyl terminated material having at least two (meth)acryloyl pendant groups. Desirably, the (meth)acryloyl pendant group is represented by the general formula: -OC(O)C(R¹)=CH₂, where R¹ is hydrogen or methyl. More desirably, the liquid gasket-forming material is a (meth)acryloyl-terminated poly acrylate. The (meth)acryloyl-terminated poly acrylate may desirably have a molecular weight from about 3,000 to about 40,000, more desirably from about 8,000 to about 15,000. Further, the (meth)acryloyl-terminated poly acrylate may desirably have a viscosity from about 200 Pas (200,000 cPs) to about 800 Pas (800,000 cPs) at 25°C (77°F), more desirably from about 450 Pas (450,000 cPs) to about 500 Pas (500,000 cPs). Details of such curable (meth)acryloyl-terminated materials may be found in European Patent Application No. EP 1 059 308 A1 to Nakagawa et al., and are commercially available from Kaneka Corporation, Japan.

Desirably, the liquid composition includes a photoinitiator. A number of photoinitiators may be employed herein to provide the benefits and advantages of the present invention to which reference is made above. Photoinitiators enhance the rapidity of the curing process when the photocurable compositions as a whole are exposed to electromagnetic radiation, such as actinic radiation. Examples of suitable photoinitiators for use herein include, but are not limited to, photoinitiators available commercially from Ciba Specialty Chemicals, under the "IRGACURE" and "DAROCUR" trade names, specifically "IRGACURE" 184 (1-hydroxycyclohexyl phenyl ketone), 907 (2-methyl-1-[4-(methylthio)phenyl]-2-morpholino propan-1-one), 369 (2-benzyl-2-N,N-dimethylamino-1-(4-morpholinophenyl)-1-butanone), 500 (the combination of 1-hydroxy cyclohexyl phenyl ketone and benzophenone), 651 (2,2-dimethoxy-2-phenyl acetophenone), 1700 (the combination of bis(2,6-dimethoxybenzoyl-2,4,4-trimethyl pentyl) phosphine oxide and 2-hydroxy-2-methyl-1-phenyl-propan-1-one), and 819 [bis(2,4,6-trimethyl benzoyl) phenyl phosphine oxide] and "DAROCUR" 1173 (2-hydroxy-2-methyl-1-phenyl-1-propan-1-one) and 4265 (the combination of 2,4,6-trimethylbenzoyldiphenylphosphine oxide and 2-hydroxy-2-methyl-1-phenyl-propan-1-one); and the visible light [blue] photoinitiators, dl-camphorquinone and "IRGACURE" 784DC. Of course, combinations of these materials may also be employed herein.

Other photoinitiators useful herein include alkyl pyruvates, such as methyl, ethyl, propyl, and butyl pyruvates, and aryl pyruvates, such as phenyl, benzyl, and appropriately substituted derivatives thereof. Photoinitiators particularly well-suited for use herein include ultraviolet photoinitiators, such as 2,2-dimethoxy-2-phenyl acetophenone (e.g., "IRGACURE" 651), and 2-hydroxy-2-methyl-1-phenyl-1-propane (e.g., "DAROCUR" 1173), bis(2,4,6-trimethyl benzoyl) phenyl phosphine oxide (e.g., "IRGACURE" 819), and the ultraviolet/visible photoinitiator combination of bis(2,6-dimethoxybenzoyl-2,4,4-trimethylpentyl) phosphine oxide and 2-hydroxy-2-methyl-1-phenyl-propan-1-one (e.g., "IRGACURE" 1700), as well as the visible photoinitiator bis (η⁵-2,4-cyclopentadien-1-yl)-bis[2,6-difluoro-3-(1H-pyrrol-1-yl)phenyl]titanium (e.g., "IRGACURE" 784DC). Useful actinic radiation includes ultraviolet light, visible light, and combinations thereof. Desirably, the actinic radiation used to cure the liquid gasket-forming material has a wavelength from about 200 nm to about 1,000 nm. Useful UV includes, but is not limited to, UVA (about 320 nm to about 410 nm), UVB (about 290 nm to about 320 nm), UVC (about 220 nm to about 290 nm) and combinations thereof. Useful visible light includes, but is not limited to, blue light, green light, and combinations thereof. Such useful visible lights have a wavelength from about 450 nm to about 550 nm.

The present invention, however, is not limited to only the use of UV radiation and other energy sources such as heat, pressure, ultraviolet, microwave, ultrasonic or electromagnetic radiation may be used to initiate polymerization of one or more of the compositions. Additionally, the initiator could be active without an activating agent. Further, the initiation process may be applied before, during and/or after assembly.

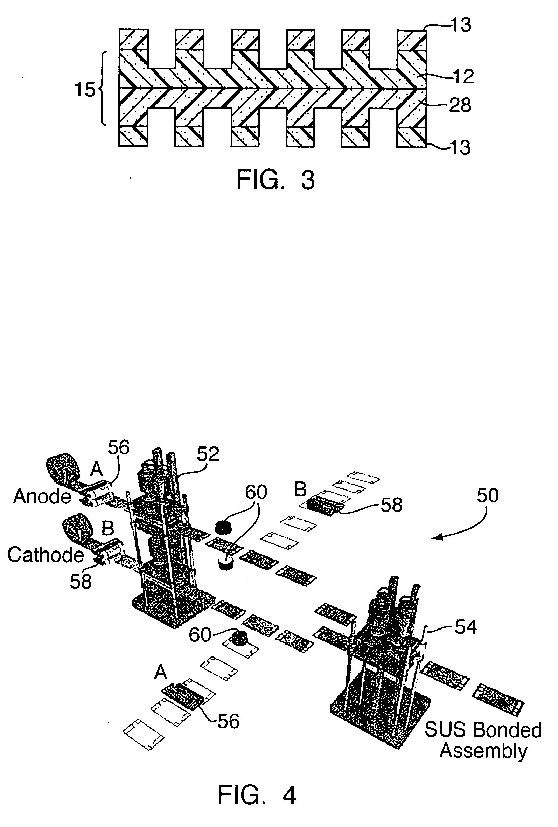

FIG. 4 depicts a system **50** for forming bonded assemblies, such as fuel cells or bonded fuel cell components, according the present invention. System **50** includes different stations **52, 54** for processing different fuel cell components. The system includes dispensers **56** and **58** for dispensing first and second parts, respectively, of a two-part sealant composition to coat different duel cell components. The system further includes sources **60** of energy, such as actinic radiation.

In another aspect of the present invention, a fuel cell stack may be prepared from a modular assembly and a gasket. A resin framed-MEA is produced in the first step. The anode and cathode resin frames are coated with a single component UV-activated sealant on one side of the resin frame. The sealant is activated by UV irradiation and the resin frames are fixtured on either side of the MEA. In the second step, the separators are bonded to the resin frames using a two-part sealant. In a two-component system, part A would be applied to substrate one, part B would be applied to substrate two. Part A and B when combined could polymerize in one form of this invention. The resin framed-MEA is coated with part A on the resin frames, and then activated by UV irradiation. At the same time, the reactant gas sides of the separators are coated with part B. The resin framed-MEA is fixtured with the anode and cathode separators to produce a unit cell (anode separator, anode resin frame, MEA, cathode resin frame, and cathode separator). In the next step, the unit cells are bonded together with a two-part sealant to form a module, containing a select number of unit cells, such as ten, for example. The unit cell is run through an operation to apply uncured polymer to the surface of one or more substrates. The coolant pathway side of the anode separator may be coated with part A and activated with UV irradiation. The coolant pathway side of the cathode separator may be coated with part B. The cells are stacked and fixtured to react part A with part B and seal the coolant pathways of the module. The separators at the ends of the module may not be coated in the process described above. In a separate manufacturing line, a gasket is produced from sheet metal and a UV-activated sealant. A roll of sheet metal is cut, coated with a single component UV-activated sealant, and placed under UV light. The fuel cell stack may be assembled by alternating the gaskets with the modules until the desired number of cells in the stack is achieved. It is also envisioned that the resin frames and separators may be coated on both sides with the appropriate sealant, fixtured to the first component and then fixtured to the second component.

In another aspect of the present invention, a fuel cell stack may be prepared from a modular assembly and a gasket. A resin framed-MEA is produced in the first step. Two resin frames are coated with a single component UV-activated sealant on one side of the resin frame. The sealant is activated by UV irradiation and the resin frames are fixtured on either side of the MEA. In the second step, a bonded separator is sealed to the resin framed-MEA using a two-part sealant. In a two-component system, part A of the sealant would be applied to a first substrate, part B of the sealant would be applied to a second substrate. Part A and B of the sealant, when combined, polymerize to form a bonded assembly according to one aspect of the present invention. For example, an anode resin frame may be coated with part A of the sealant, and then activated by UV irradiation. A resin framed-MEA may be fixtured with the bonded separators to produce a unit cell (cathode separator, anode separator, anode resin frame, MEA, and cathode resin frame). The anode and cathode separators are bonded in another manufacturing line using a two-component sealant. The coolant pathway side of the anode separator is coated with part A of the sealant, and then activated by UV irradiation. The coolant pathway side of the cathode separator is coated with part B of the sealant, and fixtured to anode separator to react part A of the sealant with part B. In the next step, the unit cells are bonded together with a two-part sealant to form a module, containing a select number of unit cells, such as but not limited to ten. The unit cell is run through a coating operation. The gas pathway side of the cathode separator may be coated with part A of the sealant and activated with UV irradiation. The cathode resin frame may be coated with part B of the sealant. The unit cells are stacked and fixtured to react part A of the sealant with part B of the sealant to produce a module of bonded unit cells. The separator and resin frame at the ends of the module would not be coated in the process described above. In a separate manufacturing line, a gasket is produced from sheet metal and a UV-activated sealant. A roll of sheet metal is cut, coated with a single component UV-activated sealant, and placed under UV light. The fuel cell stack is assembled by alternating the gaskets with the modules until the desired number of cells in the stack is achieved. It is also envisioned that the resin frames and separators may be coated on both sides with the appropriate sealant, fixtured to the first component and then fixtured to the second component.

## Claims

1. A method for forming a fuel cell component comprising:
providing a two-part sealant having a first part comprising an initiator and a second part comprising a polymerizable material;
applying the first part of the sealant to a substrate of a first fuel cell component;
applying the second part of the sealant to a substrate of a second fuel cell component;
juxtaposingly aligning the substrates of the first and second fuel cell components; and,
curing the sealant to bond the first and second fuel components to one and the other.

2. The method of claim 1, wherein the initiator is an actinic radiation initiator.

3. The method of claim 2, wherein the sealant is cured by actinic radiation.

4. The method of claim 1, wherein the polymerizable material is selected from the group consisting of a polymerizable monomer, oligomer, telechelic polymer, functional polymer and combinations thereof.

5. The method of claim 4, wherein the polymerizable material comprises a functional group is selected from the group consisting of epoxy, allyl, vinyl, acrylate, methacrylate, imide, amide, urethane and combinations thereof.

6. The method of claim 1, wherein the fuel cell components are selected from the group consisting of a cathode flow field plate, an anode flow field plate, a resin frame, a gas diffusion layer, an anode catalyst layer, a cathode catalyst layer, a membrane electrolyte, a membrane-electrode-assembly frame, and combinations thereof.

7. A method according to claim 1 for forming a fuel cell component, said method comprising the steps of:
providing a two-part sealant, wherein a first part comprises an initiator and the second part comprises a polymerizable material;
providing first and second separator plates and first and second resin frames;
coating the first separator plate with the first part of the sealant;
activating the first part of the sealant on the first separator plate with actinic radiation;
coating the first resin frame with the second part of the sealant;
juxtaposingly aligning first separator plate and the first resin frame;
curing the sealant to bond the first separator plate and the first resin frame to one and the other;
coating the second separator plate with the second part of the sealant;
coating the second resin frame with the first part of the sealant;
activating the first part of the sealant on the second resin frame with actinic radiation;
juxtaposingly aligning the second separator plate and the second resin frame;
curing the sealant to bond the second separator plate and the second resin frame to one and the other;
juxtaposingly aligning the first and second separator plates; and,
curing the sealant to bond the first and second separator plates to one and the other to form a form bipolar separator plate.

8. The method of claim 7, wherein the initiator is an actinic radiation initiator.

9. The method of claim 7, wherein the polymerizable material is selected from the group consisting of a polymerizable monomer, oligomer, telechelic polymer, functional polymer and combinations thereof.

10. The method of claim 9, wherein the polymerizable material comprises a functional group is selected from the group consisting of epoxy, allyl, vinyl, acrylate, methacrylate, imide, amide, urethane and combinations thereof.

11. A system (50) for forming a fuel cell component comprising:
a first dispenser (56) for providing a first part of a two-part sealant, wherein the first part the sealant comprises an initiator;
a second dispenser (58) for providing a second part of a two-part sealant, wherein the second part of the sealant comprises a polymerizable material;
a first station for applying the first part of the sealant to a substrate of a first fuel cell component;
a second station for applying the second part of the sealant to a substrate of a second fuel cell component;
a third station for juxtaposingly aligning the substrates of the first and second fuel cell components; and
a curing station (60) for curing the sealant to bond the first and second fuel components to one and the other.

12. The system of claim 11, wherein the initiator is an actinic radiation initiator.

13. The system of claim 12, wherein the sealant is cured by actinic radiation.

14. The system of claim 11, wherein the polymerizable material is selected from the group consisting of a polymerizable monomer, oligomer, telechelic polymer, functional polymer and combinations thereof.

15. The system of claim 14, wherein the polymerizable material comprises a functional group is selected from the group consisting of epoxy, allyl, vinyl, acrylate, methacrylate, imide, amide, urethane and combinations thereof.

## Patentansprüche

1. Verfahren zum Ausbilden einer Brennstoffzellkomponente, Folgendes umfassend:
Bereitstellen eines Zwei-Komponenten-Dichtmittels, aufweisend eine erste Komponente, die einen Initiator umfasst, und eine zweite Komponente, die ein polymerisierbares Material umfasst;
Auftragen der ersten Komponente des Dichtmittels auf ein Substrat einer ersten Brennstoffzellkomponente;
Auftragen der zweiten Komponente des Dichtmittels auf ein Substrat einer zweiten Brennstoffzellkomponente;
nebeneinanderliegendes Ausrichten der Substrate der ersten und der zweiten Brennstoffzellkomponente; und
Aushärten des Dichtmittels, um die erste und die zweite Brennstoffkomponente miteinander zu verkleben.

2. Verfahren nach Anspruch 1, wobei der Initiator ein mit chemisch wirksamer Strahlung aktivierbarer Initiator ist.

3. Verfahren nach Anspruch 2, wobei das Dichtmittel durch chemisch wirksame Strahlung ausgehärtet wird.

4. Verfahren nach Anspruch 1, wobei das polymerisierbare Material ausgewählt ist aus der Gruppe bestehend aus einem polymerisierbaren Monomer, einem Oligomer, einem telechelen Polymer, einem Funktionspolymer und Kombinationen aus diesen.

5. Verfahren nach Anspruch 4, wobei das polymerisierbare Material eine funktionelle Gruppe umfasst, ausgewählt aus der Gruppe bestehend aus Epoxidharz, Allyl, Vinyl, Acrylat, Methacrylat, Imid, Amid, Urethan und Kombinationen aus diesen.

6. Verfahren nach Anspruch 1, wobei die Brennstoffzellkomponenten ausgewählt sind aus der Gruppe bestehend aus einer Kathodenströmungsfeldplatte, einer Anodenströmungsfeldplatte, einem Harzrahmen, einer Gasdiffusionsschicht, einer Anodenkatalysatorschicht, einer Kathodenkatalysatorschicht, einem Membranelektrolyt, einem Membran-Elektroden-Einheitsrahmen sowie Kombinationen aus diesen.

7. Verfahren nach Anspruch 1 zum Ausbilden einer Brennstoffzellkomponente, wobei das Verfahren die folgenden Schritte umfasst:
Bereitstellen eines Zwei-Komponenten-Dichtmittels, wobei die erste Komponente einen Initiator umfasst und die zweite Komponente ein polymerisierbares Material umfasst;
Bereitstellen einer ersten und einer zweiten Trennplatte und eines ersten und eines zweiten Harzrahmens;
Beschichten der ersten Trennplatte mit der ersten Komponente des Dichtmittels;
Aktivieren der ersten Komponente des Dichtmittels auf der ersten Trennplatte mit chemisch wirksamer Strahlung;
Beschichten des ersten Harzrahmens mit der zweiten Komponente des Dichtmittels;
nebeneinanderliegendes Ausrichten der ersten Trennplatte und des ersten Harzrahmens;
Aushärten des Dichtmittels zum Verkleben der ersten Trennplatte und des ersten Harzrahmens miteinander;
Beschichten der zweiten Trennplatte mit der zweiten Komponente des Dichtmittels;
Beschichten des zweiten Harzrahmens mit der ersten Komponente des Dichtmittels;
Aktivieren der ersten Komponente des Dichtmittels auf dem zweiten Harzrahmen mit chemisch wirksamer Strahlung;
nebeneinanderliegendes Ausrichten der zweiten Trennplatte und des zweiten Harzrahmens;
Aushärten des Dichtmittels zum Verkleben der zweiten Trennplatte und des zweiten Harzrahmens miteinander;
nebeneinanderliegendes Ausrichten der ersten und der zweiten Trennplatte; und
Aushärten des Dichtmittels zum Verkleben der ersten und der zweiten Trennplatte miteinander, um eine formbipolare Trennplatte auszubilden.

8. Verfahren nach Anspruch 7, wobei der Initiator ein mit chemisch wirksamer Strahlung aktivierbarer Initiator ist.

9. Verfahren nach Anspruch 7, wobei das polymerisierbare Material ausgewählt ist aus der Gruppe bestehend aus einem polymerisierbaren Monomer, einem Oligomer, einem telechelen Polymer, einem Funktionspolymer und Kombinationen aus diesen.

10. Verfahren nach Anspruch 9, wobei das polymerisierbare Material eine funktionelle Gruppe umfasst, ausgewählt aus der Gruppe bestehend aus Epoxidharz, Allyl, Vinyl, Acrylat, Methacrylat, Imid, Amid, Urethan und Kombinationen aus diesen.

11. System (50) zum Ausbilden einer Brennstoffzellkomponente, Folgendes umfassend:
einen ersten Spender (56) zum Bereitstellen einer ersten Komponente eines Zwei-Komponenten-Dichtmittels, wobei die erste Komponente des Dichtmittels einen Initiator umfasst;
einen zweiten Spender (58) zum Bereitstellen einer zweiten Komponente eines Zwei-Komponenten-Dichtmittels, wobei die zweite Komponente des Dichtmittels ein polymerisierbares Material umfasst;
eine erste Station zum Auftragen der ersten Komponente des Dichtmittels auf ein Substrat einer ersten Brennstoffzellkomponente;
eine zweite Station zum Auftragen der zweiten Komponente des Dichtmittels auf ein Substrat einer zweiten Brennstoffzeilkomponente;
eine dritte Station zum nebeneinanderliegenden Ausrichten der Substrate der ersten und der zweiten Brennstoffzellkomponente; und
eine Aushärtestation (60) zum Aushärten des Dichtmittels, um die erste und die zweite Brennstoffkomponente miteinander zu verkleben.

12. System nach Anspruch 11, wobei der Initiator ein mit chemisch wirksamer Strahlung aktivierbarer Initiator ist.

13. System nach Anspruch 12, wobei das Dichtmittel durch chemisch wirksame Strahlung ausgehärtet wird.

14. System nach Anspruch 11, wobei das polymerisierbare Material ausgewählt ist aus der Gruppe bestehend aus einem polymerisierbaren Monomer, einem Oligomer, einem telechelen Polymer, einem Funktionspolymer und Kombinationen aus diesen.

15. System nach Anspruch 14, wobei das polymerisierbare Material eine funktionelle Gruppe umfasst, ausgewählt aus der Gruppe bestehend aus Epoxidharz, Allyl, Vinyl, Acrylat, Methacrylat, Imid, Amid, Urethan und Kombinationen aus diesen.

## Revendications

1. Procédé de formation d'un composant de pile à combustible comprenant les étapes consistant à:
produire un matériau d'étanchéité à deux parties dont une première partie comporte un initiateur et une seconde partie comporte une matière polymérisable ;
appliquer la première partie du matériau d'étanchéité à un substrat d'un premier composant de pile à combustible ;
appliquer la seconde partie du matériau d'étanchéité à un substrat d'un second composant de pile à combustible ;
aligner de façon juxtaposée les substrats des premier et second composants de pile à combustible ; et
faire durcir le matériau d'étanchéité pour lier les premier et second composants de combustible l'un à l'autre.

2. Procédé selon la revendication 1, dans lequel l'initiateur est un initiateur de rayonnement actinique.

3. Procédé selon la revendication 2, dans lequel le matériau d'étanchéité est durci par rayonnement actinique.

4. Procédé selon la revendication 1, dans lequel la matière polymérisable est choisie dans le groupe constitué par un monomère, oligomère, polymère téléchélique, polymère fonctionnel polymérisables et leurs combinaisons.

5. Procédé selon la revendication 4, dans lequel la matière polymérisable comprend un groupe fonctionnel choisi dans le groupe constitué par un époxy, un allyle, un vinyle, un acrylate, un méthacrylate, un imide, un amide, un uréthane et leurs combinaisons.

6. Procédé selon la revendication 1, dans lequel les composants de pile à combustible sont choisis dans le groupe constitué par une plaque de champ de densité cathodique, une plaque de champ de densité anodique, un cadre en résine, une couche de diffusion gazeuse, une couche de catalyseur anodique, une couche de catalyseur cathodique, un électrolyte à membrane, un cadre d'ensemble membrane-électrode, et leurs combinaisons.

7. Procédé selon la revendication 1 de formation d'un composant de pile à combustible, ledit procédé comprenant les étapes consistant à :
produire un matériau d'étanchéité à deux parties, une première partie comportant un initiateur et la seconde partie comportant une matière polymérisable ;
produire des première et seconde plaques de séparation et des premier et second cadres de résine ;
revêtir la première plaque de séparation avec la première partie du matériau d'étanchéité ;
activer la première partie du matériau d'étanchéité sur la première plaque de séparation avec un rayonnement actinique ;
revêtir le premier cadre de résine avec la seconde partie du matériau d'étanchéité ;
aligner de façon juxtaposée la première plaque de séparation et le premier cadre de résine ;
faire durcir le matériau d'étanchéité pour lier la première plaque de séparation et le premier cadre de résine l'un à l'autre ;
revêtir la seconde plaque de séparation avec la seconde partie du matériau d'étanchéité ;
revêtir le second cadre de résine avec la première partie du matériau d'étanchéité ;
activer la première partie du matériau d'étanchéité sur le second cadre de résine avec un rayonnement actinique ;
aligner de façon juxtaposée la seconde plaque de séparation et le second cadre de résine ;
faire durcir le matériau d'étanchéité pour lier la seconde plaque de séparation et le second cadre de résine une à l'autre ;
aligner de façon juxtaposée les première et seconde plaques de séparation ; et
faire durcir le matériau d'étanchéité pour lier les première et seconde plaques de séparation l'un à l'autre afin de former une plaque de séparation de forme bipolaire.

8. Procédé selon la revendication 7, dans lequel l'initiateur est un initiateur de rayonnement actinique.

9. Procédé selon la revendication 7, dans lequel la matière polymérisable est choisi dans le groupe constitué par un monomère, oligomère, polymère téléchélique, polymère fonctionnel polymérisables et leurs combinaisons.

10. Procédé selon la revendication 9, dans lequel le matériau polymérisable comprend un groupe fonctionnel choisi dans le groupe constitué par un époxy, un allyle, un vinyle, un acrylate, un méthacrylate, un imide, un amide, un uréthane et leurs combinaisons.

11. Système (50) de formation d'un composant de pile à combustible comprenant :
un premier distributeur (56) destiné à produire une première partie d'un matériau d'étanchéité à deux parties, la première partie du matériau d'étanchéité comportant un initiateur ;
un second distributeur (58) destiné à produire une seconde partie d'un matériau d'étanchéité à deux parties, la seconde partie du matériau d'étanchéité comportant une matière polymérisable ;
une première station destinée à appliquer la première partie du matériau d'étanchéité à un substrat d'un premier composant de pile à combustible ;
une deuxième station destinée appliquer la seconde partie du matériau d'étanchéité à un substrat d'un second composant de pile à combustible ;
une troisième station destinée à aligner de façon juxtaposée les substrats des premier et second composants de pile à combustible ; et
une station de durcissement (60) destinée à durcir le matériau d'étanchéité pour lier les premier et second composants de combustible l'un à l'autre.

12. Système selon la revendication 11, dans lequel l'initiateur est un initiateur de rayonnement actinique.

13. Système selon la revendication 12, dans lequel le matériau d'étanchéité est durci par un rayonnement actinique.

14. Système selon la revendication 11, dans lequel le matériau polymérisable est choisi dans le groupe constitué par un monomère, oligomère, polymère téléchélique, polymère fonctionnel polymérisables et leurs combinaisons.

15. Système selon la revendication 14, dans lequel le matériau polymérisable comprend un groupe fonctionnel choisi dans le groupe constitué par un époxy, un allyle, un vinyle, un acrylate, un méthacrylate, un imide, un amide, un uréthane et leurs combinaisons.
